# EUROPÄISCHE PATENTANMELDUNG

(11) **EP 1 431 214 A2**
(43) Veröffentlichungstag der Anmeldung: **23.06.2004**
(21) Anmeldenummer: 03028889.8
(22) Anmeldetag: 16.12.2003
(51) Int. Cl.: B65G 1/137

(54) **Verfahren zum Transportieren Stückgutartikeln zwischen zwei Lagerungseinrichtungen, Transporteinrichtung und Belieferungssystem**

(30) Priorität: 16.12.2002 DE 10258590
(71) Anmelder: Westfalia Pharma Systems GmbH & Co.KG, 33829 Borgholzhausen/Bhf. (DE)
(72) Erfinder: Upmeyer, Ulrich, 33829 Borgholzhausen/Bhf. (DE)
(74) Vertreter: Philipp, Matthias, Dr.

(57) **Zusammenfassung**

Verfahren zum Transportieren von Stückgutartikeln, insbesondere Packungen für Apotheken, zwischen einer ersten und einer zweiten Lagerungseinrichtung, mit den Schritten:
- Bereitstellen einer ersten Lagerungseinrichtung mit einer Identifizierungseinrichtung zum Bestimmen einer Art und/oder Identität der Stückgutartikel und mit einer automatisierten Handhabungseinrichtung zum Ein- und Auslagern von Stückgutartikeln,
- Bereitstellen einer Transporteinheit zum Aufnehmen und Transportieren von Stückgutartikeln und zum Zusammenwirken mit der ersten Lagerungseinrichtung in einer Entladeposition derart, daß die Handhabungseinrichtung Stückgutartikel aus der Transporteinheit aus- und in diese einlagern kann,
- Übermitteln einer Bestellung umfassend Art und Anzahl von Stückgutartikeln an die zweite Lagerungseinrichtung,
- Bestücken der Transporteinheit an der zweiten Lagerungseinrichtung mit den bestellten Stückgutartikeln,
- Transportieren der Transporteinheit zu der ersten Lagerungseinrichtung und in die Entladeposition,
- Entnehmen der bestellten Stückgutartikel aus der Transporteinheit, Bestimmen von deren Art und/oder Identität und Einlagern in der ersten Lagerungseinrichtung, und/oder Entnehmen von zurückzutransportierenden Stückgutartikeln aus der ersten Lagerungseinrichtung und Einlagern in die Transporteinheit,
- Transportieren der Transporteinheit zurück zu der zweiten Lagerungseinrichtung,
sowie Transporteinheit zum Transportieren von Stückgutartikeln und Belieferungssystem zum Durchführen des Verfahrens.

## Beschreibung

Die Erfindung betrifft zunächst ein Verfahren zum Transportieren von Stückgutartikeln, insbesondere Packungen für Apotheken, zwischen einer ersten und einer zweiten Lagerungseinrichtung.

Im Falle der Belieferung von Apotheken mit bestellten Packungen von Medikamenten wird gegenwärtig so vorgegangen, daß ein Lagerverwaltungsrechner der betreffenden Apotheke ein Bestellsignal an ein Zentrallager abgibt, in dem daraufhin die Bestellung in einem geeigneten Transportmittel zusammengestellt wird, bspw. einen Karton, einer Transportkiste o.ä. Dieses Transportmittel wird dann an die jeweilige Apotheke geliefert, wo die bestellten Pakkungen von Hand oder mit Hilfe eines automatisierten Handhabungssystems in die Lagerungseinrichtung der Apotheke, bspw. Regale oder Schubladen, eingelagert werden. Bevor die eigentliche Einlagerung erfolgen kann, müssen die einzelnen Packungen identifiziert und üblicherweise auch vermessen werden, um eine platzsparende Lagerung zu ermöglichen. Dieser Schritt erfolgt in der Regel von Hand, bspw. mit Hilfe eines Scannertischs, womit ein nicht unerheblicher Zeitaufwand verbunden ist. Andererseits läßt sich dieser Schritt nicht leicht automatisieren, da die einzulagernden Packungen mit jeder Lieferung lose angeliefert werden.

Die Erfindung hat sich zur Aufgabe gestellt, ein Verfahren zum Transportieren von Stückgutartikeln, wobei es sich insbesondere um Packungen für Apotheken handeln kann, zwischen einer ersten und einer zweiten Lagerungseinrichtung anzugeben, welches in einfacher Weise einen höheren Automatisierungsgrad als bisher ermöglicht.

Diese Aufgabe wird erfindungsgemäß durch ein Verfahren zum Transportieren von Stückgutartikeln, insbesondere Packungen für Apotheken, zwischen einer ersten und einer zweiten Lagerungseinrichtung gelöst, mit den Schritten:
- Bereitstellen einer ersten Lagerungseinrichtung mit einer Identifizierungseinrichtung zum Bestimmen einer Art und/oder einer Identität der Stückgutartikel, und mit einer automatisierten Handhabungseinrichtung zum Ein- und Auslagern von Stückgutartikeln aus der bzw. in die erste Lagerungseinrichtung,
- Bereitstellen einer Transporteinheit zum Aufnehmen und Transportieren von Stückgutartikeln und zum Zusammenwirken mit der ersten Lagerungseinrichtung in einer Entladeposition derart, daß die Handhabungseinrichtung Stückgutartikel aus der Transporteinheit aus- und in diese einlagern kann,
- Übermitteln einer Bestellung umfassend Art und Anzahl von Stückgutartikeln an die zweite Lagerungseinrichtung,
- Bestücken der Transporteinheit an der zweiten Lagerungseinrichtung mit den bestellten Stückgutartikeln,
- Transportieren der Transporteinheit zu der ersten Lagerungseinrichtung und in die Entladeposition,
- Entnehmen der bestellten Stückgutartikel aus der Transporteinrichtung, Bestimmen von deren Art und/oder Identität und Einlagern in der ersten Lagerungseinrichtung, und/oder Entnehmen von zurückzutransportierenden Stückgutartikeln aus der ersten Lagerungseinrichtung und Einlagern in die Transporteinheit,
- Transportieren der Transporteinheit zurück zu der zweiten Lagerungseinrichtung.

Die Bestellung kann über einen Lagerverwaltungsrechner der ersten Lagerungseinrichtung erfolgen. Ferner kann die Handhabungseinrichtung von dem bzw. einem Lagerverwaltungsrechner gesteuert werden.

Insbesondere kann die Bestellung online über ein Netzwerk, insbesondere Internet, erfolgen.

Art und ggf. Identität sowie der Lagerort der einzelnen Stückgutartikel können in dem bzw. einem Lagerverwaltungsrechner gespeichert werden.

Ferner kann vorgesehen sein, daß der bzw. ein Lagerverwaltungsrechner der ersten Lagerungseinrichtung erfaßt, ob eine bestimmte Anzahl von in der ersten Lagerungseinrichtung eingelagerten Stückgutartikeln einer bestimmten Art unterschritten ist, und daraufhin selbsttätig eine Bestellung über eine bestimmte Anzahl der erfaßten Art von Stückgutartikeln übermittelt.

Es besteht die Möglichkeit, daß mehrere Bestellungen einzelner Stückgutartikel gesammelt werden und die Bestellung erst bei Vorliegen eines vorgebbaren Kriteriums erfolgt, wobei bspw. die Bestellung erfolgen kann, wenn eine Mindestanzahl von zu bestellenden Stückgutartikeln erreicht ist, oder die Bestellung dann erfolgt, wenn ein Mindestbestellwert von zu bestellenden Stückgutartikeln erreicht ist, oder aber dann, wenn die Transporteinheit durch die zu bestellenden Stückgutartikel im wesentlichen vollständig gefüllt wird, d.h. ein Liefervorgang optimal ausgenutzt wird.

Es kann vorgesehen sein, daß die Stückgutartikel in einer bestimmten Lage in der Transporteinheit eingelagert werden, bspw. so, daß deren kleinste Seitenabmessung in vertikaler Richtung weist.

An der Transporteinheit können Informationen über die Stückgutartikel gespeichert werden, die von einer Lese- und Schreibeinheit an der ersten und/oder zweiten Lagerungseinrichtung lesbar und/oder schreibbar sind.

Die Stückgutartikel können in der ersten Lagerungseinrichtung an einer anhand ihrer Größe ermittelten Lagerposition eingelagert werden.

Zweckmäßigerweise ist vorgesehen, daß die Stückgutartikel vermessen werden, bevor sie in der ersten Lagerungseinrichtung eingelagert werden. Die Stückgutartikel können mechanisch, mittels Ultraschall oder optisch, insbesondere durch Scannen, vermessen werden, insbesondere in drei Raumkoordinaten.

Außerdem kann vorgesehen sein, daß die Art der Stückgutartikel mittels eine Strichcodes oder eines Transponders bestimmt wird, insbesondere anhand einer Pharmazentralnummer.

Zusätzlich oder alternativ kann vorgesehen sein, daß eine (unverwechselbare) Identität jedes einzelnen Stückgutartikels festgelegt wird, um auch der Art nach gleiche Stückgutartikel individuell ein- und auslagern zu können, insbesondere im Hinblick auf unterschiedliche Lagerungszeiträume, Verfallsdaten, Mindesthaltbarkeitsdaten usw. Eine derartige Identität kann bspw. mit dem ebenfalls jedem einzelnen Stückgutartikel individuell zugeordneten Lagerort verknüpft werden. Alternativ kann auf eine fortlaufende Numerierung beim Eingang, das Lieferdatum oder ähnliche Daten zurückgegriffen werden, um einzelnen Artikeln eine individuelle Kennzeichnung geben zu können.

Bevorzugt ist vorgesehen, daß die Bestimmung der Art und Identität der Stückgutartikel und deren Vermessung rechnergestützt erfolgt.

Es kann vorgesehen sein, daß die Transporteinheit vor dem Entnehmen der Stückgutartikel vorübergehend an der ersten Lagerungseinrichtung fixiert wird, um ein störungsfreies Zusammenwirken der Handhabungseinrichtung mit der Transporteinheit zu ermöglichen.

Zweckmäßigerweise ist vorgesehen, daß die Stückgutartikel in der Transporteinheit zum Transport lagesicher fixiert werden.

Die Erfindung betrifft ferner eine Transporteinheit zum Transportieren von Stückgutartikeln, insbesondere Packungen für Apotheken, zwischen einer ersten und einer zweiten Lagerungseinrichtung.

Hierbei besteht die Aufgabe der Erfindung darin, eine derartige Transporteinheit dahingehend weiterzuentwickeln, daß ein weitestgehend automatisiertes Zusammenwirken mit einer Handhabungseinrichtung an der ersten Lagerungseinrichtung möglich ist.

Eine erfindungsgemäße Transporteinheit zum Transportieren von Stückgutartikeln, insbesondere Packungen für Apotheken, zwischen einer ersten und einer zweiten Lagerungseinrichtung umfaßt erfindungsgemäß:
- ein insbesondere mit Laufrollen versehenes Gehäuse, in dem regal- oder fächerartige Aufnahmemittel zum vorübergehenden Einlagern der Stückgutartikel angeordnet sind,
- eine Transportsicherung für eingelagerte Stückgutartikel,
- eine Verriegelung zum Andocken an die erste Lagerungseinrichtung in einer Entladeposition,
- eine in der Entladeposition zu öffnende Seitenfläche zum Ermöglichen eines Zugriffs einer Handhabungseinrichtung auf die eingelagerten Stückgutartikel.

Zweckmäßigerweise ist vorgesehen, daß die Transporteinrichtung mit einer Speichereinrichtung zum Speichern von Daten betreffend Stückgutartikel und/oder die Identität der Transporteinrichtung aufweist. Zur Identifizierung der Transporteinrichtung kann diese mit einem Transponder versehen sein.

Zweckmäßigerweise ist vorgesehen, daß die Transporteinrichtung eingelagerte Stückgutartikel mechanisch in ihrer Lage arretiert, bspw, durch eine Verringerung der lichten Höhe von Regalfächern bzw. des gegenseitigen Abstands der regal- oder fächerartigen Aufnahmemittel.

Zweckmäßigerweise ist vorgesehen, daß die zu öffnende Seitenfläche selbsttätig öffnet, sobald die Verriegelung in Eingriff ist, d.h. die Transporteinheit sich in der Entladeposition befindet.

Vorzugsweise ist vorgesehen, daß die Transportsicherung gelöst ist, wenn die Verriegelung in Eingriff ist, und umgekehrt.

Weiter kann vorgesehen sein, daß die Transporteinheit mit Steckkontakten zur Energieund/oder Signalübertragung bei in Eingriff befindlicher Verriegelung versehen ist, um Energie und/oder Signale in der Entladeposition zwischen der Lagerungseinrichtung und der Transporteinheit übertragen zu können.

Die Verriegelung kann durch Bolzen, Haken, Ösen, Magneten, Rast- oder Klemmeinrichtungen gebildet sein.

Die Erfindung bezieht sich schließlich auf ein Belieferungssystem zum Durchführen des erfindungsgemäßen Verfahrens, zum Transportieren von Stückgutartikeln, insbesondere Pakkungen für Apotheken, zwischen einer ersten und einer zweiten Lagerungseinrichtung, zwischen denen Bestelldaten umfassend Art und Anzahl von Stückgutartikeln austauschbar sind, wobei die erste Lagerungseinrichtung eine Identifizierungseinrichtung zum Bestimmen einer Art und/oder Identität der Stückgutartikel und eine automatische Handhabungseinrichtung zum Ein- und Auslagern von Stückgutartikeln aufweist, mit einer Transporteinheit zum Aufnehmen und Transportieren von bestellten Stückgutartikeln, die in eine Entladeposition in Zusammenwirken mit der ersten Lagerungseinrichtung bringbar ist, in der die Handhabungseinrichtung Stückgutartikel aus der Transporteinheit aus- und/oder in diese einlagern kann.

Zweckmäßigerweise umfaßt das Belieferungssystem eine erfindungsgemäße Transporteinheit.

Bevorzugt ist vorgesehen, daß die erste Lagerungseinrichtung einen Lagerverwaltungsrechner zum Übermitteln der Bestelldaten und zum Steuern der Handhabungseinrichtung und der Identifizierungseinrichtung aufweist.

Weiter kann eine rechnergestützte Vermessungseinrichtung zum Vermessen der Stückgutartikel vorgesehen sein.

Eine bevorzugte Ausführungsform der Erfindung wird nachfolgend anhand einer Zeichnung erläutert, wobei
Fig. 1 eine schematische Seitenansicht einer erfindungsgemäßen Transporteinheit zeigt,
Fig. 2 eine schematische Vorderansicht er Transporteinheit nach Fig. 1 zeigt,
Fig. 3 eine schematische Schnittansicht einer Lagerungseinrichtung in Zusammenwirken mit einer erfindungsgemäßen Transporteinheit zeigt, und
Fig. 4 eine Vorderansicht der ersten Lagerungseinrichtung nach Fig. 3 zeigt.

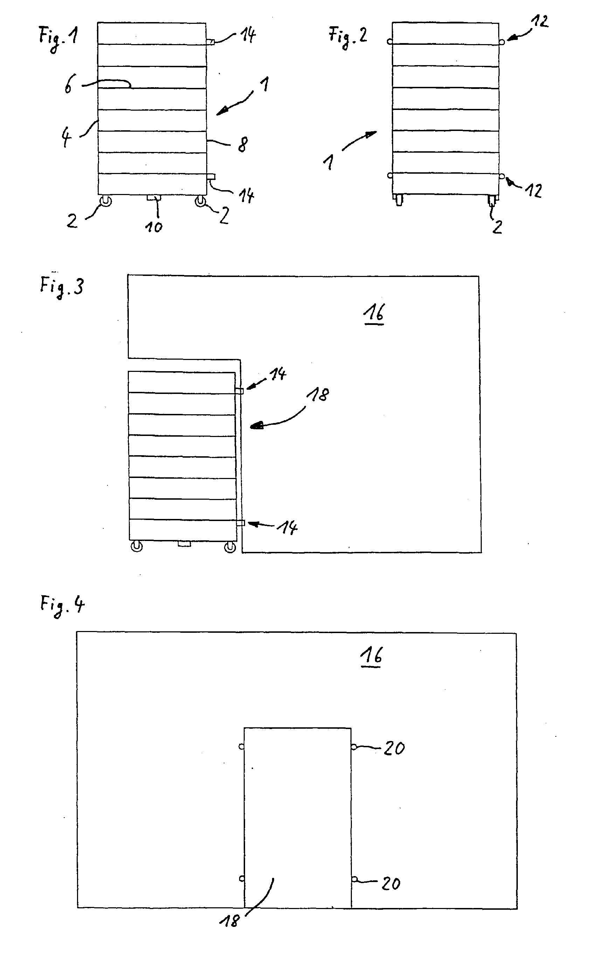

Fig. 1 und 2 erläutern in schematischen Seiten- und Vorderansichten eine erfindungsgemäße, im ganzen mit 1 bezeichnete Transporteinheit zum Transportieren von Stückgutartikeln, mit einem mit Laufrollen 2 versehenen Gehäuse 4, in dem regal- oder schubladenartige Aufnahmemittel 6 zum vorübergehenden Einlagern der zu transportierenden Stückgutartikel angeordnet sind. Die Aufnahmemittel 6 können feststehende, zwischen Seitenwänden 8 des Gehäuses angeordnete Böden oder in einer gewünschten Richtung ausziehbare schubladenartige Elemente sein.

Um die in der Transporteinheit vorübergehend eingelagerten Stückgutartikel während des Transports vor unkontrollierten Bewegungen innerhalb der Transporteinheit zu schützen, ist eine Transportsicherung vorgesehen, die bspw. dadurch gebildet sein kann, daß der gegenseitige vertikale Abstand benachbarter Aufnahmemittel verringert wird oder daß die einzelnen Stückgutartikel in sonstiger Weise gegen das jeweilige Aufnahmemittel gedrückt werden, bspw. durch mechanische oder pneumatische Elemente (aufblasbare Kammern o.ä.).

Die Transporteinheit 1 ist zweckmäßigerweise mit einem Transponder versehen, der Informationen bezüglich der Transporteinheit tragen kann, wie bspw. eine Identifizierungsnummer o.ä., und ggf. zusätzlich Daten bezüglich der aufgenommenen Stückgutartikel, der ersten Lagerungseinrichtung, zu der die Stückgutartikel transportiert werden, und/oder der zweiten Lagerungseinrichtung, an der die Transporteinheit mit den zu transportierenden Stückgutartikeln beladen wird.

Die Vorderansicht nach Fig. 2 zeigt ferner, daß die Transporteinheit mit seitlichen mechanischen Führungen 12 versehen ist, die der Erleichterung des Einschiebevorgangs in eine Lagerungseinrichtung dienen.

Wie Fig. 1 zeigt, ist die Transporteinheit mit einer Verriegelung 14 versehen, bspw. einer Rast- oder Klemmeinrichtung, die der vorübergehenden Arretierung der Transporteinheit an einer Lagerungseinrichtung dient. Darüber hinaus ist die Transporteinheit vorzugsweise mit Kontaktmitteln, bspw. Steckkontakten, versehen, damit Energie- und/oder Signalübertragung zwischen der Transporteinheit und einer Lagerungseinrichtung möglich ist, sobald sich die Transporteinheit in einer Lade-/Entladeposition an einer Lagerungseinrichtung befindet, insbesondere dann, wenn die Verriegelung in Eingriff gebracht ist.

Fig. 4 erläutert in einer schematisierten Darstellung eine Lagerungseinrichtung 16, bei der es sich bspw. um die zu beliefernde, erste Lagerungseinrichtung handeln kann, wobei diese eine Andockstation 18 aufweist, in die eine Transporteinheit 1 in Entladeposition bringbar und verriegelbar ist. Führungen 20, die den Führungen 12 der Transporteinheit entsprechen, dienen der mechanischen Führung der Transporteinheit während eines Andockvorgangs.

Fig. 3 erläutert in einer schematischen Schnittansicht die erste Lagerungseinrichtung 16 mit einer angedockten bzw. in Entladeposition befindlicher und verriegelter Transporteinheit 1. Die Verriegelung 14 wirkt hierbei mit einer entsprechenden Verriegelung (nicht dargestellt) der ersten Lagerungseinrichtung 16 zusammen, und über die genannten Steckkontakte (nicht dargestellt) kann eine Energie- und/oder Signalübertragung (Informationsübertragung) zwischen Transporteinheit 1 und erster Lagerungseinrichtung 16 erfolgen.

Bei der Ausführung des erfindungsgemäßen Verfahrens wird zunächst eine Bestellung betreffend eine bestimmte Art und Anzahl von Stückgutartikeln, bspw. Packungen für eine Apotheke, an eine zweite Lagerungseinrichtung übermittelt, bei es sich bspw. um ein Lager eines Pharmahändlers handeln kann. Eine Transporteinheit 1 wird an der zweiten Lagerungseinrichtung bereitgestellt und mit den bestellten Packungen beladen, wobei der Ladevorgang bspw. mittels einer automatisierten Handhabungseinrichtung, gesteuert von einem Lagerverwaltungsrechner, automatisiert ablaufen kann. Anschließend wird die Transporteinheit in eine transportgerechten Zustand versetzt, d.h. die eingelagerten Packungen gegen unerwünschte Bewegungen gesichert, und ggf. werden Daten betreffend die eingelagerten Stückgutartikel in eine Speichereinrichtung der Transporteinrichtung geschrieben.

Danach wird die Transporteinheit in geeigneter Weise, bspw. mittels eines Transportfahrzeugs, zu der ersten Lagerungseinrichtung transportiert, wobei es sich typischerweise um ein Lager in einer Apotheke handeln kann. Die erste Lagerungseinrichtung ist mit einer automatisierten Handhabungseinrichtung zum Ein- und Auslagern von Packungen aus einer Transporteinheit in die Lagerungseinrichtung und umgekehrt versehen, sowie mit einer Identifizierungseinrichtung, um die Art einer jeweils angelieferten Packung bzw. deren Identität zu bestimmen.

Die Transporteinheit wird entsprechend Fig. 3 in Entladeposition gebracht, d.h. in Zusammenwirken mit der ersten Lagerungseinrichtung derart, daß deren Handhabungseinrichtung die angelieferten Packungen aus der Transporteinheit entnehmen und in die erste Lagerungseinrichtung einlagern kann.

Hierbei kann vorgesehen sein, daß die Transporteinheit eine Seitenwand aufweist, bspw. an ihrer Vorderseite, Oberseite oder einer Seitenfläche, die sich dann öffnet bzw. den Zugriff für die Handhabungseinrichtung freigibt, wenn die Entladeposition erreicht ist oder die Verriegelung in Eingriff ist. Die betreffende Seitenfläche kann sich hierbei selbsttätig oder motorisch gesteuert öffnen.

Die von der Handhabungseinrichtung aus der Transporteinheit entnommenen Packungen werden vor dem Einlagern in die erste Lagerungseinrichtung zunächst vermessen, und es wird durch einen Lagerverwaltungsrechner anhand der ermittelten Größe eine passende Lagerposition bestimmt. Die Steuerung der Handhabungseinrichtung, die rechnergestützte Vermessung der einzelnen Packungen, deren Identifizierung, die Bestimmung einer passenden Lagerposition sowie der Einlagerungsvorgang werden durch den Lagerverwaltungsrechner, der auch die Bestellung abgibt, ausgeführt und koordiniert. Der Lagerverwaltungsrechner steht ferner mit der Transporteinheit in Verbindung, während sich dieser in Entladeposition befindet, um ggf. Daten mit diesem auszutauschen.

### Bezugszeichenliste

- 1: Transporteinrichtung
- 2: Laufrollen
- 4: Gehäuse
- 6: Aufnahmemittel
- 8: Seitenwand
- 10: Transponder
- 12: Führung
- 14: Verriegelung
- 16: erste Lagerungseinrichtung
- 18: Andockstation
- 20: Führung

## Patentansprüche

1. Verfahren zum Transportieren von Stückgutartikeln, insbesondere Packungen für Apotheken, zwischen einer ersten (16) und einer zweiten Lagerungseinrichtung, mit den Schritten:
- Bereitstellen einer ersten Lagerungseinrichtung (16) mit einer Identifizierungseinrichtung zum Bestimmen einer Art und/oder Identität der Stückgutartikel und mit einer automatisierten Handhabungseinrichtung zum Ein- und Auslagern von Stückgutartikeln,
- Bereitstellen einer Transporteinheit (1) zum Aufnehmen und Transportieren von Stückgutartikeln und zum Zusammenwirken mit der ersten Lagerungseinrichtung (16) in einer Entladeposition derart, daß die Handhabungseinrichtung Stückgutartikel aus der Transporteinheit (1) aus- und in diese einlagern kann,
- Übermitteln einer Bestellung umfassend Art und Anzahl von Stückgutartikeln an die zweite Lagerungseinrichtung,
- Bestücken der Transporteinheit (1) an der zweiten Lagerungseinrichtung mit den bestellten Stückgutartikeln,
- Transportieren der Transporteinheit (1) zu der ersten Lagerungseinrichtung (16) und in die Entladeposition,
- Entnehmen der bestellten Stückgutartikel aus der Transporteinheit, Bestimmen von deren Art und/oder Identität und Einlagern in der ersten Lagerungseinrichtung (16), und/oder Entnehmen von zurückzutransportierenden Stückgutartikeln aus der ersten Lagerungseinrichtung (16) und Einlagern in die Transporteinheit (1),
- Transportieren der Transporteinheit (1) zurück zu der zweiten Lagerungseinrichtung.

2. Verfahren nach Anspruch 1, **dadurch gekennzeichnet, daß** die Bestellung über einen Lagerverwaltungsrechner der ersten Lagerungseinrichtung (16) erfolgt.

3. Verfahren nach Anspruch 1 oder 2, **dadurch gekennzeichnet, daß** die Handhabungseinrichtung von einem Lagerverwaltungsrechner gesteuert wird.

4. Verfahren nach Anspruch 1, 2 oder 3, **dadurch gekennzeichnet, daß** die Bestellung online über eine Netzwerk, insbesondere Internet, erfolgt.

5. Verfahren nach einem der vorangehenden Ansprüche, **dadurch gekennzeichnet, daß** Art und Lagerort der Stückgutartikel in einem Lagerverwaltungsrechner gespeichert werden.

6. Verfahren nach einem der vorangehenden Ansprüche, **dadurch gekennzeichnet, daß** ein Lagerverwaltungsrechner der ersten Lagerungseinrichtung (16) erfaßt, ob eine bestimmte Anzahl von in der ersten Lagerungseinrichtung eingelagerten Stückgutartikeln einer bestimmten Art unterschritten ist, und daraufhin selbsttätig eine Bestellung über eine bestimmte Anzahl der erfaßten Art von Stückgutartikeln übermittelt.

7. Verfahren nach einem der vorhergehenden Ansprüche, **dadurch gekennzeichnet, daß** mehrere Bestellungen einzelner Stückgutartikel gesammelt werden und die Bestellung erst bei Vorliegen eines vorgebbaren Kriteriums erfolgt.

8. Verfahren nach Anspruch 7, **dadurch gekennzeichnet, daß** die Bestellung erfolgt, wenn eine Mindestanzahl von zu bestellenden Stückgutartikeln erreicht ist.

9. Verfahren nach Anspruch 7 oder 8, **dadurch gekennzeichnet, daß** die Bestellung erfolgt, sobald ein Mindestbestellwert von zu bestellenden Stückgutartikeln erreicht ist.

10. Verfahren nach Anspruch 7, **dadurch gekennzeichnet, daß** die Bestellung erfolgt, wenn die Transporteinheit (1) durch die zu bestellenden Stückgutartikel im wesentlichen vollständig gefüllt wird.

11. Verfahren nach einem der vorhergehenden Ansprüche, **dadurch gekennzeichnet, daß** die Stückgutartikel in einer bestimmten Lage in der Transporteinheit (1) eingelagert werden.

12. Verfahren nach einem der vorangehenden, **dadurch gekennzeichnet, daß** an der Transporteinheit (1) Informationen über die Stückgutartikel gespeichert werden, die von einer Leseund Schreibeinheit an der ersten und/oder zweiten Lagerungseinrichtung lesbar und/oder schreibbar sind.

13. Verfahren nach einem der vorangehenden Ansprüche, **dadurch gekennzeichnet, daß** die Stückgutartikel in der ersten Lagerungseinrichtung (16) an einer anhand ihrer Größe ermittelten Lagerposition eingelagert werden.

14. Verfahren nach einem der vorangehenden Ansprüche, **dadurch gekennzeichnet, daß** die Stückgutartikel vermessen werden, bevor sie in der ersten Lagerungseinrichtung (16) eingelagert werden.

15. Verfahren nach Anspruch 14, **dadurch gekennzeichnet, daß** die Stückgutartikel mechanisch, mittels Ultraschall oder optisch, insbesondere durch Scannen, vermessen werden, insbesondere in drei Raumkoordinaten.

16. Verfahren nach einem der vorangehenden Ansprüche, **dadurch gekennzeichnet, daß** die Art der Stückgutartikel mittels eines Strichcodes oder eines Transponders bestimmt wird, insbesondere anhand einer Pharmazentralnummer.

17. Verfahren nach einem der vorangehenden Ansprüche, **dadurch gekennzeichnet, daß** eine Identität jedes einzelnen Stückgutartikels festgelegt wird.

18. Verfahren nach einem der Ansprüche 14 bis 17, **dadurch gekennzeichnet, daß** die Bestimmung der Art und/oder der Identität der Stückgutartikel und deren Vermessung rechnergestützt erfolgt.

19. Verfahren nach einem der vorangehenden Ansprüche, **dadurch gekennzeichnet, daß** die Transporteinheit (1) vor dem Entnehmen der Stückgutartikel vorübergehend an der ersten Lagerungseinrichtung (16) fixiert wird.

20. Verfahren nach einem der vorangehenden Ansprüche, **dadurch gekennzeichnet, daß** die Stückgutartikel in der Transporteinheit (1) zum Transport lagesicher fixiert werden.

21. Transporteinheit (1) zum Transportieren von Stückgutartikeln, insbesondere Packungen für Apotheken, zwischen einer ersten und einer zweiten Lagerungseinrichtung, mit:
- einem insbesondere mit Laufrollen (2) versehenen Gehäuse (4), in dem regal- oder fächerartige Aufnahmemittel zum vorübergehenden Einlagern der Stückgutartikel angeordnet sind,
- einer Transportsicherung für eingelagerte Stückgutartikel,
- einer Verriegelung (14) zum Andocken an die erste Lagerungseinrichtung (16) in einer Entladeposition,
- einer in der Entladeposition zu öffnenden Seitenfläche zum Ermöglichen eines Zugriffs einer Handhabungseinrichtung auf die eingelagerten Stückgutartikel.

22. Transporteinrichtung nach Anspruch 21, **dadurch gekennzeichnet, daß** diese mit einer Speichereinrichtung zum Speichern von Daten betreffend Stückgutartikel und/oder die Identität der Transporteinrichtung aufweist.

23. Transporteinheit nach Anspruch 22, **dadurch gekennzeichnet, daß** diese mit einem Transponder (10) zur Identifizierung versehen ist.

24. Transporteinheit nach einem der Ansprüche 21 bis 23, **dadurch gekennzeichnet, daß** die Transportsicherung eingelagerte Stückgutartikel mechanisch in ihrer Lage arretiert.

25. Transporteinheit nach einem der Ansprüche 21 bis 24, **dadurch gekennzeichnet, daß** die zu öffnende Seitenfläche selbsttätig öffnet, sobald die Verriegelung in Eingriff ist.

26. Transporteinheit nach einem der Ansprüche 21 bis 25, **dadurch gekennzeichnet, daß** die Transportsicherung gelöst ist, wenn die Verriegelung in Eingriff ist, und umgekehrt.

27. in der Entladepositionm insbesondere bei in Eingriff befindlicher Verriegelung versehen ist.

28. Transporteinheit nach einem der Ansprüche 21 bis 27, **dadurch gekennzeichnet, daß** die Verriegelung durch Bolzen, Haken, Ösen, Magneten, Rast- oder Klemmeinrichtungen gebildet ist.

29. Belieferungssystem zum Durchführen des Verfahrens nach einem der Ansprüche 1 bis 20, zum Transportieren von Stückgutartikeln, insbesondere Packungen für Apotheken, zwischen einer ersten (16) und einer zweiten Lagerungseinrichtung, zwischen denen Bestelldaten umfassend Art und Anzahl von Stückgutartikeln austauschbar sind, wobei die erste Lagerungseinrichtung (16) eine Identifizierungseinrichtung zum Bestimmen einer Art und/oder Identität der Stückgutartikel und eine automatische Handhabungseinrichtung zum Ein- und Auslagern von Stückgutartikeln aufweist, mit einer Transporteinheit (1) zum Aufnehmen und Transportieren von bestellten Stückgutartikeln, die in eine Entladeposition in Zusammenwirken mit der ersten Lagerungseinrichtung (16) bringbar ist, in der die Handhabungseinrichtung Stückgutartikel aus der Transporteinheit (1) aus- und/oder in diese einlagern kann.

30. Belieferungssystem nach Anspruch 29, **gekennzeichnet durch** eine Transporteinheit (1) nach einem der Ansprüche 21 bis 28.

31. Belieferungssystem nach Anspruch 29 oder 30, **dadurch gekennzeichnet, daß** die erste Lagerungseinrichtung einen Lagerverwaltungsrechner zum Übermitteln der Bestelldaten und zum Steuern der Handhabungseinrichtung und der Identifizierungseinrichtung aufweist.

32. Belieferungssystem nach einem der Ansprüche 29 bis 31, **gekennzeichnet durch** eine rechnergestützte Vermessungseinrichtung zum Vermessen der Stückgutartikel.
